# FASCICULE DE BREVET EUROPEEN

(11) **EP 0 849 989 B1**
(45) Date de publication et mention de la délivrance du brevet: **17.11.1999**
(21) Numéro de dépôt: 97921886.4
(22) Date de dépôt: 25.04.1997
(51) Int. Cl.: A01K 11/00

(54) **BOLUS RUMINAL POUR L'IDENTIFICATION ELECTRONIQUE D'UN RUMINANT**
RUMINALER BOLUS ZUM ELEKTRONISCHEN KENNZEICHNEN VON WIEDERKÄUENDEN TIEREN
RUMINAL BOLUS FOR ELECTRONIC IDENTIFICATION OF A RUMINANT

(30) Priorité: 09.07.1996 ES 9601530
(43) Date de publication de la demande: 01.07.1998
(73) Titulaire: EUROPEAN COMMUNITY, 2920 Luxembourg (LU)
(72) Inventeur: CAJA LOPEZ, Gerardo, E-08190 Sant-Cugat (ES); VILASECA VINTRO, Joan Francesc, E-08024 Barcelone (ES); KORN, Christophe, I-21020 Taino (IT)
(74) Mandataire: Thévenet, Jean-Bruno
(86) Numéro de dépôt international: FR9700744
(87) Numéro de publication internationale: WO9801025

(56) Documents cités:
- EP-A- 0 480 530
- EP-A- 0 646 313
- WO-A-93/05648
- DE-A- 4 317 340
- F. V. TOOLEY: "The Handbook of Glass Manufacture, Volume I" 1974 , BOOKS FOR INDUSTRY, INC. , NEW YORK (US) XP002036891 14775 voir page 1-17

## Description

La présente invention concerne un bolus ruminal pour l'identification électronique des ruminants. L'invention est destinée plus particulièrement, mais non exclusivement, aux ruminants vivant en milieu fermier (bovins, bufalins, ovins et caprins), ainsi qu'en exploitation industrielle, cynégétique ou en état sauvage (rennes et cervidés et ruminants en général). Le bolus peut être utilisé avec des animaux ayant un poids élevé (à partir d'environ 25 kg) ou de faible poids (inférieur à 25 kg), selon les variantes de l'invention.

Un bolus ruminal classique est constitué d'un corps comportant un dispositif électronique de stockage et d'échange de données, qui se loge dans l'un des estomacs ou pré-estomacs du ruminant afin d'en assurer son suivi. Il est principalement utilisé pour l'identification des animaux, le contrôle de production (engraissement, production de lait, contrôle de la reproduction et de l'état sanitaire...) ou pour l'automatisation des opérations communes de conduite de ces animaux, telles que l'alimentation, le contrôle d'accès à des aires restreintes ou à des portes de couloirs de classification, etc. De manière habituelle, ces informations sont fournies et recueillies à l'aide d'ondes électromagnétiques.

On connaît par le document US-A 4 262 632 un système électronique d'identification pour troupeaux de ruminants à base de bolus comprenant un transmetteur qui peut être administré par voie orale, comme un bol alimentaire, et qui est optimisé pour être introduit dans le deuxième pré-estomac ci-après dénommé "réseau" (réticule) d'un ruminant. Le dispositif se présente sous la forme d'un cylindre d'une longueur d'environ 75 mm et d'un diamètre d'environ 18 mm. Afin d'éviter tout phénomène de régurgitation, il est recommandé que le dispositif ait une densité supérieure à 2 g/cm³. A cette fin, il est prévu d'incorporer un poids à l'intérieur du bolus, au voisinage du dispositif d'échange de données.

D'autres types de bolus connus peuvent se loger indifféremment dans le réseau ou le rumen (premier pré-estomac).

A titre d'exemple, le document W0 93-A-05 648 décrit un bolus de forme cylindrique ou de capsule plate, réalisé en résine ou en verre de haute densité, comprenant un dispositif électronique. Ce bolus est également pourvu d'un système de représentation visuel permanent qui permet l'identification de l'animal aussi lorsque le bolus est retiré de l'animal mort.

Le document AU-A 64 92 12 décrit un appareil pour l'identification d'un animal basé sur un transpondeur passif inclus dans une capsule de porcelaine et ayant une densité égale ou supérieure à 1,75 g/cm³. Ce système comprend un bloc magnétique permettant sa saisie après abattage de l'animal. La capsule de porcelaine est remplie d'un liquide dense afin d'obtenir la densité spécifique désirée pour maintenir le transpondeur dans une position opérationnelle.

Dans d'autres types de bolus, on utilise un corps longiforme dont une extrémité est lestée par une masse métallique afin de conférer la densité requise et d'assurer que le corps reste implanté dans une position verticale dans le rumen ou le réseau. Un tel bolus est par exemple décrit dans le document WO-A-95 17 809.

Si la présence d'une masse métallique permet d'accroître avantageusement la densité du bolus, elle présente cependant les inconvénients suivants. Premièrement, elle interfère avec les transmissions radiofréquence entre le dispositif électronique au sein du bolus et l'extérieur, notamment en décalant la fréquence des circuits accordés. Deuxièmement, il est fréquent que les estomacs des ruminants contiennent, volontairement ou involontairement, des corps étrangers ou des pièces magnétisées qui tendent à s'agglutiner contre la pièce métallique et ainsi à atténuer les signaux de transmission et de réception, ou à engendrer un rejet ou expulsion du bolus.

On constate dans la majorité des cas que les bolus connus tendent, soit à dessein, soit de manière accidentelle, à se localiser définitivement dans le rumen. Ils présentent donc l'inconvénient de ne pouvoir être utilisés avec succès qu'après que l'animal allaitant ait développé le rumen. Leur distance de lecture, ainsi que leur efficacité de lecture, sont également limitées par la grande taille du rumen et par l'orientation souvent aléatoire du dispositif électronique utilisé.

Un objet de l'invention est ainsi de prévoir un bolus de haute densité, permettant alors des dimensions réduites et, de ce fait, d'obtenir une fixation fiable dans le réseau (deuxième pré-estomac) du ruminant avec localisation précise contre la paroi costale gauche, derrière le coeur.

Un autre objet de l'invention est de permettre de réaliser des bolus en grandes séries et à faible prix de revient.

Encore un autre objet plus général de la présente invention est de permettre d'obtenir un bolus ne présentant pas les inconvénients de ceux de l'art antérieur.

Ces objets sont réalisés selon l'invention par un bolus pour l'identification d'un ruminant, destiné à se loger dans le réseau de ce dernier, et comprenant un corps ayant un logement destiné à renfermer le dispositif d'échange de données (tel qu'un transpondeur électronique), ce bolus étant caractérisé par le fait que le corps est réalisé en un matériau à base d'alumine (Al₂O₃).

Il a été découvert que l'alumine présente le double avantage de procurer une très grande densité pour le corps tout en présentant une résistance élevée aux sucs et au processus digestif des pré-estomacs des ruminants. Ce matériau est par ailleurs peu onéreux et facile à utiliser dans des procédés de fabrication en grande série.

En plus, ce matériau est non magnétique et présente une excellente transparence aux fréquences radio utilisées par l'échange à distance de données au moyen du dispositif logé dans le corps.

L'alumine est de préférence présente dans le matériau en une quantité égale ou supérieure à 60 % en poids. Cette quantité peut être comprise entre 75 et 99,5 % en poids et de préférence entre 80 et 99,5 % en poids.

Selon une variante, qui ne constitue toutefois pas l'objet de l'invention, le matériau comprend de la silice qui est majoritaire en poids dans le matériau. Dans ce cas, la silice peut être présente dans le matériau en quantité égale ou supérieure à 40 % en poids, de façon préférentielle égale ou supérieure à 50 % en poids et, de façon plus préférentielle égale ou supérieure à 55 % en poids.

Lorsque la silice est majoritaire, l'alumine est de préférence présente en faible quantité dans le matériau, cette quantité étant de façon préférentielle inférieure à 10 % en poids et, de façon plus préférentielle, inférieure à 5 % en poids.

Dans certaines variantes de l'invention, le matériau est en outre à base d'alumine et de silice, l'alumine et la silice constituant ensemble au moins 80 % en poids de la composition du matériau, et de préférence au moins 90 % en poids de la composition du matériau.

Pour optimiser la composition chimique du matériau, on peut y adjoindre un ou plusieurs des composés suivants : MgO, CaO, BaO, Na₂O, K₂O, Fe₂O₃, TiO₂. Ces composés peuvent être présents chacun en une quantité comprise entre 0,1 et 2 % en poids.

Avantageusement, le bolus ne comporte aucune pièce métallique ajoutée (hormis le circuit électronique du dispositif d'échange de données) de manière à bénéficier du caractère non magnétique du matériau utilisé.

La composition du matériau dans les plages précitées permet aisément d'obtenir une densité égale ou supérieure à 2,5 g/cm³. Cette densité peut aussi être égale ou supérieure à 3 g/cm³, voire égale ou supérieure à 3,5 g/cm³.

Avantageusement, le bolus est constitué d'un corps symétrique avec une répartition uniforme des masses, de sorte que son barycentre et son centre géométrique coïncident.

Afin d'assurer une bonne fixation du bolus dans le réseau, ce premier est de forme cylindrique à section transversale circulaire, les bords à chaque extrémité étant chanfreinés ou arrondis. Cette géométrie, en combinaison avec un choix approprié de dimensions, permet notamment une fixation du bolus dans le sens de l'axe majeur du réseau, en position oblique et parallèle au diaphragme. Ceci confère une grande stabilité et permet d'obtenir des conditions de liaison électromagnétique optimales et uniformes.

Cette fixation s'obtient de manière fiable lorsque le rapport entre la longueur et le rayon du corps du bolus se situe de préférence dans une plage variant entre 2:1 et 5:1. Avantageusement, ce rapport est dans une plage de 2,5:1 à 4:1.

Dans un mode de réalisation préféré pour un bolus destiné aux ruminants ayant un poids supérieur à environ 25 kg, pouvant atteindre par exemple 1 000 à 1 300 kg pour des taureaux, la longueur du corps est dans une plage de 50 à 90 mm.

Lorsque le bolus est plus particulièrement destiné aux ruminants ayant un poids égal ou inférieur à environ 25 kg, la longueur du corps est de préférence entre 30 et 70 mm.

Selon une autre caractéristique avantageuse du bolus selon la présente invention, le logement pour le dispositif électronique d'échange de données comprend une cavité accessible par une extrémité ou les deux extrémités opposées du corps. Cette cavité peut être matérialisée par un trou borgne dans l'axe principal du corps ou par un trou traversant dans l'axe principal du corps. Une fois le dispositif d'échange de données mis en place, le trou peut être fermé à l'aide d'une résine époxy ou d'un ciment plastique résistant à l'environnement régnant dans le réseau du ruminant.

Selon une variante, le trou précité est fermé à la ou à chaque extrémité a l'aide d'une pièce mâle, telle qu'une vis à pression ou un rivet auto-bloquant pouvant se fixer contre une paroi du trou.

Lorsque la cavité se présente sous la forme d'un trou traversant, celui-ci peut être fermé à chaque extrémité par un rivet auto-bloquant constitué par deux éléments séparés ayant chacun une portion de tige à une extrémité de laquelle se trouve une tête, les deux tiges respectives étant agencées de manière à s'engager par leurs extrémités libres et à se bloquer l'une dans l'autre en refermant entre elles le dispositif d'échange de données.

Cet agencement présente l'avantage de permettre de loger le dispositif d'échange de données avant l'assemblage final, et d'assurer automatiquement son positionnement précis dans la cavité. Il permet également de réduire le nombre d'opérations successives à effectuer sur le corps du bolus, la mise en place du dispositif et du rivet s'effectuant simultanément.

Selon le mode de réalisation préféré de l'invention, le bolus comprend en outre un manchon en matériau élastique destiné à recevoir le dispositif d'échange de données et ayant un diamètre extérieur lui permettant de s'adapter sans jeu dans le logement.

La présente invention concerne également un procédé de fabrication d'un bolus tel qu'il vient d'être décrit, caractérisé en ce qu'il comporte les étapes de : préparer un mélange à base d'alumine (Al₂O₃) ou de silice (SiO₂), de former à partir du mélange une préforme du corps du bolus et de soumettre la préforme à une étape de cuisson.

Au besoin, le procédé comporte en outre une étape de mise aux dimensions finales et de finition de la préforme du corps du bolus après l'étape de cuisson. L'étape de cuisson peut s'effectuer à une température comprise entre 1000°C et 2500°C. Cependant, il a été trouvé que d'excellents résultats pour l'application visée sont obtenus lorsque la température de cuisson est sensiblement égale à 1400°C.

Dans un mode de réalisation préféré, la préforme est réalisée par extrusion et par découpe de la pièce extrudée conformément à la forme générale du corps du bolus. Dans ce cas, le logement du corps du bolus peut être réalisé par perçage avant l'étape de cuisson.

Toutefois, il est également possible de réaliser le corps du bolus par un procédé de moulage, dans lequel cas le logement sera formé en même temps que le corps.

D'autres avantages et caractéristiques de l'invention ressortiront à la lecture des modes de réalisation préférés, présentés uniquement à titre d'exemples, en référence aux dessins en annexe, dans lesquels :
- la figure la est une vue en coupe longitudinale d'un bolus selon un premier mode de réalisation de l'invention;
- la figure 1b est une vue en section selon le plan I-I de la figure 1a;
- la figure 2 est une vue simplifiée en coupe longitudinale d'un transpondeur électronique apte à se loger dans le bolus de la figure 1;
- la figure 3 est une vue en coupe longitudinale d'un manchon destiné à recevoir le transpondeur de la figure 2;
- la figure 4 est une vue de profil d'un rivet auto-bloquant destiné à refermer la cavité dans le bolus de la figure 1;
- la figure 5 est une vue en coupe longitudinale d'un bolus selon un deuxième mode de réalisation de l'invention,
- la figure 6 est une vue en coupe longitudinale d'un rivet auto-bloquant utilisé dans le mode de réalisation de la figure 5;
- la figure 7 est un schéma montrant la localisation du bolus dans un ruminant,
- la figure 8a est un schéma simplifié des premières étapes de fabrication d'un bolus selon un mode préféré de l'invention, et
- la figure 8b est un schéma simplifié des dernières étapes de fabrication du bolus, dans la continuation de la figure 8a.

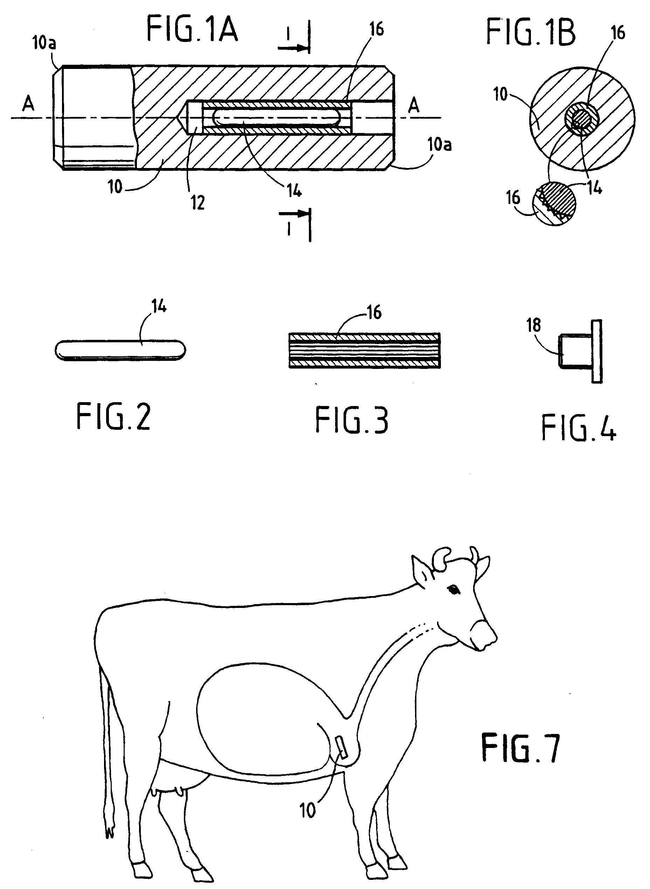

Comme le montrent les figures 1a et 1b, le bolus 10 selon le premier mode de réalisation de l'invention se présente sous forme d'une capsule cylindrique à section transversale circulaire, ayant des bords chanfreinés 10a à chaque extrémité.

A l'intérieur de cette capsule se trouve une cavité 12 de forme cylindrique à section circulaire destinée à loger un dispositif d'échange de données sous forme d'un transpondeur électronique 14 (figure 2). Selon ce premier mode de réalisation, la cavité 12 se présente sous la forme d'un trou borgne dans l'axe principal A-A' de la capsule.

On notera que le centre géométrique et le barycentre de la capsule coïncident sensiblement (dans le sens où la capsule ne présente pas un balourd notable dû à la présence de la cavité 12 sous forme de trou borgne).

Le transpondeur 14 utilisé est de type connu, comprenant un émetteur-récepteur passif activé par radiofréquence, des capteurs incorporés permettant l'identification ou la collecte d'informations à partir du corps du ruminant, et un circuit de mémorisation contenant un code programmé ou programmable. Ce type de transpondeur est généralement encapsulé dans un cylindre de verte ou de cristal.

Le dispositif d'échange de données 14 est logé dans un manchon en matériau élastique 16, tel qu'un élastomère (figure 3). Ce manchon présente un diamètre extérieur adapté à la cavité 12 du bolus, de sorte que l'ensemble transpondeur/manchon y soit retenu sensiblement sans jeu. Il a été trouvé que le manchon 16 confère une excellente protection du transpondeur 14 contre les chocs mécaniques et thermiques, tout en présentant une bonne transparence pour les radiofréquences.

Lorsque le transpondeur 14 est en place, le trou borgne est refermé à l'aide de résine époxy ou de ciment plastique résistant à l'environnement existant dans le réseau.

Selon une variante, le trou peut être refermé par un rivet 18 tel que représenté à la figure 4.

Il est également possible d'utiliser à cette fin une vis à pression en matière plastique, ou tout autre moyen connu permettant une fermeture hermétique et résistante aux sucs digestifs du réseau de l'animal.

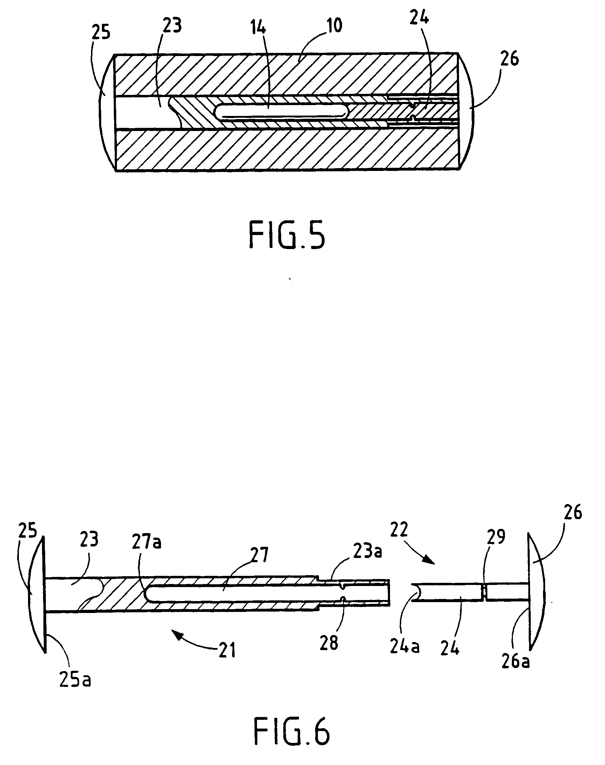

La figure 5 montre un bolus selon un deuxième mode de réalisation de l'invention. Il diffère de celui précédemment décrit principalement par le fait que la cavité 12 est réalisée par un trou traversant dans l'axe principal du A-A' du cylindre.

Selon ce mode de réalisation, le trou peut aussi être refermé par un dispositif à rivet auto-bloquant spécifiquement adapté à loger le transpondeur 14, comme il sera maintenant expliqué par référence à la figure 6.

Le dispositif à rivet auto-bloquant est constitué par deux éléments sépares 21, 22 ayant chacun une portion de tige 23, 24 à une extrémité de laquelle se trouve une tête 25, 26. Il est réalisé de préférence en matière plastique d'un type ABS. Les deux tiges respectives 23, 24 sont agencées de manière à s'engager par leurs extrémités libres, à l'opposé de la tête, et à se bloquer lune dans l'autre en refermant entre elles le transpondeur 14.

A cette fin, la tige 23 d'un premier 21 des éléments a la forme d'un cylindre dimensionné pour pouvoir s'engager sans jeux dans le trou formant la cavité 12 du corps 10 du bolus. Cette tige 23 comporte un évidement 27 sous forme de trou borgne, accessible par l'extrémité libre, permettant de loger le transpondeur 14. Le fond 27a du trou borgne est concave de manière à bien épouser une première extrémité du transpondeur 14. Une partie 23a de la tige 23 vers l'extrémité libre présente une section réduite avec une ou plusieurs fentes longitudinales (non représentées) permettant son engagement avec la tige 24 du deuxième élément par élasticité. Cette partie à section réduite 23a comporte une nervure périphérique 28 sur sa surface interne constituant une partie d'un moyen d'encliquetage.

La tige 24 du second élément 22 est de section circulaire, dimensionnée pour se serrer contre la surface intérieure de la partie à section réduite 23a de la tige du premier élément 21. Elle comporte une gorge périphérique 29 destinée à recevoir la nervure 28 du premier élément 21, formant ainsi l'autre partie du moyen d'encliquetage. L'extrémité libre de la tige 24 du second élément 22 comporte un creux 24a dans le sens axial pouvant épouser la deuxième extrémité du transpondeur 14.

L'ensemble des deux éléments 21, 22 est configuré de sorte que lorsque la nervure 28 du premier élément est engagé dans la gorge 29 du second élément, les faces internes 25a, 26a des têtes respectives sont séparées par une distance correspondant à longueur du corps 10 du bolus. Cette disposition est réalisée par le fait que la tige 23 du premier élément a la même longueur que le corps du bolus; son extrémité vient alors en butée contre la face interne 26a de la tête du deuxième élément lorsque le rivet autobloquant est en position d'encliquetage. D'autre part, les positions respectives du fond 27a du trou borgne dans le premier élément 21 et du fond du creux 24a dans le second élément 22, lorsque ces éléments sont engagés, sont déterminées de sorte que le transpondeur 14 est logé sans jeu dans le sens axial du bolus, et au centre géométrique de ce dernier.

Lors du montage du transpondeur 14 dans le corps 10 du bolus, ce premier est d'abord inséré dans le trou borgne 27 formé dans le premier élément 21 du rivet auto-bloquant. Cette opération peut s'effectuer hors du corps du bolus, ce qui permet de réduire le nombre d'opérations successives sur ce dernier.

Une fois que le transpondeur 14 est retenu dans le premier élément 21, celui-ci est introduit par une extrémité dans le trou traversant 12 du corps du bolus. Le second élément 22 du rivet autobloquant est alors introduit par l'autre extrémité du corps du bolus et un effort est appliqué entre les têtes respectives 25, 26 jusqu'à ce qu'il y ait encliquetage de la nervure 28 sur la gorge 29. Le rivet est alors bloqué avec les faces internes 25a, 26a des têtes en appui contre les faces respectives du corps du bolus.

On notera que dans ce deuxième mode de réalisation, les têtes 25, 26 peuvent couvrir toute la surface des faces du corps 10 et présenter une surface externe bombée. Dans ce cas, les bords du corps 10 seront dépourvus de chanfrein.

Le choix particulier pour la composition du matériau du corps du bolus, qu'il soit à base d'alumine ou de silice, dépendra de plusieurs facteurs : procédé de fabrication, densité voulue, dimensions du bolus etc..., lesquels font intervenir notamment le poids et le type de ruminant pour lequel le bolus est destiné.

Pour de nombreux cas, on peut envisager un matériau qui comprend environ 80 % en poids d'alumine et 15 % en poids de silice (SiO₂).

Le complément, en pourcentage en poids, pourra être partagé à concours de 0,1 à 2 % en poids entre les produits suivants : MgO, CaO, BaO, Na₂O, K₂O, Fe₂O₃, et TiO₂. Bien entendu, on peut n'utiliser que l'un ou un groupe parmi ces produits cités, en adaptant les quantités.

Avec une telle composition, le matériau peut avoir une densité supérieure à 3,2 g/cm³.

La porosité d'un tel matériau à base d'alumine (Al₂O₃) et/ou de silice (SiO₂) de haute densité est négligeable.

Il sera maintenant présenté trois exemples spécifiques de composition du matériau à forte contenance en alumine ayant les caractéristiques générales précitées.

### EXEMPLE 1 : Composition du matériau à base d'alumine formant le corps du bolus, ayant un poids spécifique de 3,2g/cm³.

| Constituant | Al₂O₃ | SiO₂ | MgO | CaO | BaO | Na₂O | K₂O | Fe₂O₃ | TiO₂ | Autres |
|---|---|---|---|---|---|---|---|---|---|---|
| % en poids | 80,6 | 15,1 | 1,1 | 0,9 | 0,8 | 0,6 | 0,5 | 0,2 | 0,2 | <0,1 |

Un bolus a été réalisé à partir de cette composition suivant le premier et le deuxième mode de réalisation. Ses caractéristiques sont résumées dans le tableau 1.
Tableau 1 : Ensemble des caractéristiques du bolus selon le premier ou deuxième mode de réalisation.

- Forme et dimensions
   . Cylindrique avec bords extrêmes aplatis
   . Poids situé entre 65 et 70 g
   . Longueur = 69 mm, diamètre = 20 mm
   . Orifice cylindrique (trou borgne) : longueur = 45 mm, diamètre = 6,5 mm
   . Orifice cylindrique (trou traversant) : diamètre 8 mm
- Caractéristiques physiques du matériau :
   . Riche en alumine de couleur blanche
   . Porosité (%) = 0
   . Poids spécifique (g/cm³) > 3,2
   . Rigidité diélectrique (kV/mm) > 10
   . Choc thermique > 140°C
   . Conductivité thermique de 20° à 100°C (w/mkg) = 10-16
   . Coefficient de dilatation linéaire à 600°C (microns) = 6-8
   . Résistance à la flexion (MPa) >200

### EXEMPLE 2 :Composition du matériau à base d'alumine formant le corps du bolus, ayant un poids spécifique de 3,5 g/cm³.

| Constituant | Al₂O₃ | SiO₂ | MgO | CaO | BaO | Na₂O | K₂O | Fe₂O₃ | TiO₂ | Autres |
|---|---|---|---|---|---|---|---|---|---|---|
| % en poids | 95,0 | 3,0 | 0,6 | 0,5 | 0,2 | 0,2 | 0,2 | 0,1 | 0,1 | <0,1 |

### EXEMPLE 3 :Composition du matériau à base d'alumine formant le corps du bolus, ayant un poids spécifique > 3,8g/cm³.

| Constituant | Al₂O₃ | SiO₂ | MgO | CaO | Autres |
|---|---|---|---|---|---|
| % en poids | 99,0 | 0,5 | 0,2 | 0,2 | <0,1 |

Le matériau des exemples 2 et 3 est particulièrement bien adapté aux ruminants de petite taille, ayant un poids inférieur à environ 25 kg, tels que les jeunes moutons ou chèvres. On peut ainsi obtenir un bolus ayant la forme générale conformément aux premier et deuxième modes de réalisation, ayant une masse supérieure à 45 g, voire 65 g avec des dimensions relativement réduites (par exemple 55 mm x 15 mm ou 60 mm x 17 mm).

Selon une variante, qui ne constitue toutefois pas l'objet de l'invention, le matériau formant le corps du bolus est à base de silice (SiO₂). Dans ce cas, la teneur en alumine peut être très réduite, étant par exemple inférieure à 10 %, voire même inférieure à 5 % en poids.

Cette composition à base de silice est utilisable notamment pour des bolus de dimensions relativement grandes, par exemple supérieures à 65 mm x 20 mm, destinés aux ruminants de poids élevé (bétail, buffles).

Un exemple d'un tel matériau, utilisé pour la réalisation d'un bolus de 75 mm x 20 mm est donné ci-après.

### EXEMPLE 4 :Composition du matériau à base de silice formant le corps du bolus, ayant un poids spécifique de 2,8 g/cm³.

| Constituant | Al₂O₃ | SiO₂ | MgO | CaO | BaO | Na₂O | K₂O | Fe₂O₃ | TiO₂ | P₂O₃ | Autres |
|---|---|---|---|---|---|---|---|---|---|---|---|
| % en poids | 3,1 | 60 | 28,0 | 0,7 | 6,6 | 0,2 | 0,4 | 0,5 | 0,2 | 0,1 | < 0,1 |

On notera qu'il est préférable de complémenter la teneur en silice avec un autre composé, tel que le MgO ou analogue, de sorte que la silice et cet autre composé constituent ensemble au moins 70 %, voire 80 %, ou encore plus de 85 % en poids du matériau.

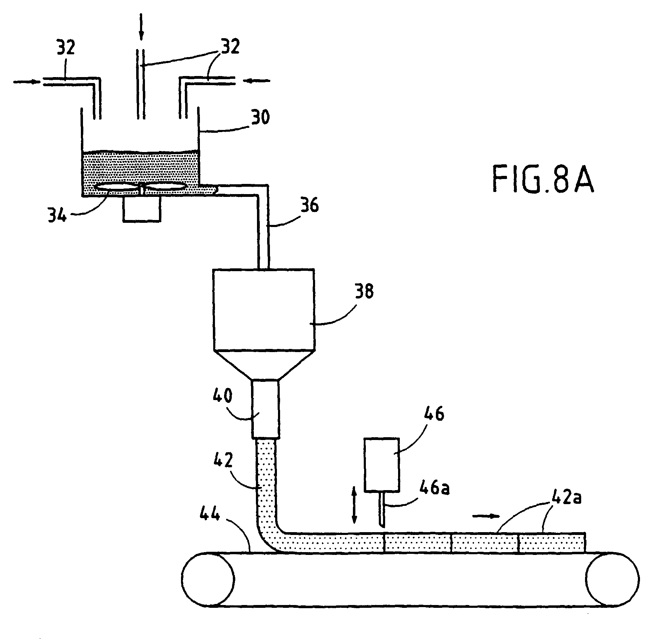

Les caractéristiques de densité, de forme générale et de dimensions données dans les exemples pré-cités permettent au bolus de rester d'une façon permanente dans le réseau du ruminant, et ce dans le sens de l'axe majeur du réseau (position oblique), comme le montre la figure 7.

L'utilisation d'un matériau à base d'alumine ou de silice de haute densité pour la réalisation du corps du bolus permet d'obtenir des dimensions optimisées pour une administration par voie orale à de nombreuses espèces d'animaux ruminants de n'importe quel âge.

Lorsque les bolus selon les premier et second modes de réalisation présentés sont tout particulièrement configurés pour utilisation avec des ruminants ayant un poids supérieur à 25 kg, l'oesophage est suffisamment développé pour permettre la descente de la capsule, à partir de son introduction dans la partie postérieure de la bouche de l'animal (proche de la glotte) jusqu'à ce que sa localisation permanente dans le réseau des ruminants soit effectuée (figure 7).

Du fait de ses dimensions relativement restreintes, le bolus peut être administré à l'aide d'un simple pistolet à médicament qui est utilisé de façon courante par les éleveurs.

Sa conception et ses caractéristiques évitent à la capsule de se placer de manière définitive dans le rumen de l'animal, premier pré-estomac des ruminants et le plus volumineux (lors des mouvements des aliments durant la digestion et la rumination). Elle ne peut également être régurgitée vers la bouche ou passer dans des parties postérieures du système digestif des ruminants (feuillet, troisième pré-estomac).

La conception du bolus et les caractéristiques de l'alumine ou de la silice permettent l'utilisation d'un seul et même type de capsule pour toutes les espèces de ruminants, quel que soit leur âge, dès lors qu'ils présentent un poids adéquat. Il n'est donc pas nécessaire d'attendre le développement du rumen, tel que cela est le cas normalement avec l'âge à la fin de la période d'allaitement, du fait que la capsule est placée dans une position fixe uniquement dans le réseau.

La localisation permanente de la capsule dans le réseau permet d'éviter les mouvements erratiques dans le rumen. En effet, dans ce dernier cas, le volume important du rumen diminue les possibilités de localisation de la capsule par rapport au réseau. Le volume important du rumen diminue également l'efficacité ainsi que la distance de lecture du système électronique placé dans la capsule.

La petite taille du réseau, ses caractéristiques contractiles, ainsi que la disposition longitudinale de ses fibres musculaires dans le sens antéro-postérieur permettent une orientation fixe du même type de la capsule et du dispositif d'échange de données. Cette orientation augmente la distance de lecture possible dans l'ce crâno-caudal (longitudinal) de l'animal et la diminue dans son axe costal (transversal). De cette manière, on augmente l'efficacité de lecture lorsque l'animal s'approche du point de lecture et on diminue les possibilités de confusion avec des animaux proches.

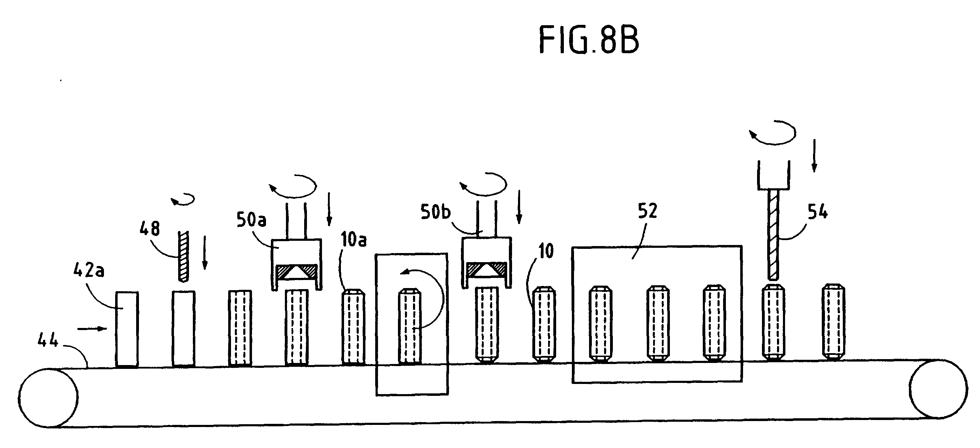

Il sera maintenant décrit, en référence aux figures 8a et 8b, les étapes principales de la fabrication du bolus selon un mode de réalisation préféré de la présente invention.

En premier lieu (figure 8a), on prépare dans une cuve 30 un mélange des constituants du matériau à base d'alumine ou de silice devant former le corps du bolus. Ces constituants de base sont acheminés vers la cuve par des conduits respectifs 32 pour permettre de réaliser un procédé continu.

La cuve 30 comprend des moyens de brassage 34 et éventuellement des moyens de chauffage (non représentés) pour assurer au matériau une consistance et un mélange optimaux en vue d'une extrusion.

Le matériau est retiré depuis la base de la cuve et acheminé le long d'un conduit 36 menant à une extrudeuse 38. Celle-ci est équipée d'une tête d'extrusion 40 sous forme d'un simple orifice ayant une section de sortie correspondant à la section du corps du bolus. A la sortie de la tête d'extrusion, le matériau se présente comme un cylindre plein et continu 42, suspendu verticalement à celle-ci. Ce cylindre est déposé sur un tapis roulant 44 évoluant sur un plan horizontal vers différents postes de fabrication.

Une fois sur le tapis roulant 44, le cylindre de matériau 42 passe à un poste 46 pour subir un découpage en barres cylindriques 42a de longueur correspondant sensiblement à celle du produit fini. Dans l'exemple, ce poste 46 comporte une lame 46a oscillant à une fréquence adaptée à la vitesse du tapis roulant 44.

Les barres 42a sont ensuite mises debout et passent à un poste de perçage 48 (figure 8b) pour former un trou traversant dans le sens axial du corps, ce trou correspondant au logement 12 selon le premier mode de réalisation. (Dans le cas d'une fabrication de corps de bolus selon le deuxième mode de réalisation, le perçage est interrompu avant de traverser les deux extrémités, afin de former le trou borgne.)

Les barres passent ensuite à un premier poste 50a de formation du bord chanfreinés 10a qui opère à l'une des extrémités de la barre 42a. Après cette opération, les barres sont retournées et passent à un deuxième poste 50b de formation du bord chanfreiné, identique au premier, d'où elles sortent avec les chanfreins 10a à chaque extrémité conformément aux premier ou deuxième modes de réalisation. A l'issue de ces opérations, on obtient une préforme du corps dont les dimensions correspondent sensiblement à celle de l'objet final.

La préforme passe alors à un poste de cuisson 52 où elle subit une cuisson durant un temps prédéterminé. La température de cuisson est variable en fonction de la composition spécifique du matériau et des propriétés mécaniques voulues. De manière générale, cette température peut se situer dans une plage entre 1000°C et 2500°C. Pour la composition du matériau spécifiée dans l'exemple (tableau I), ainsi que pour des variantes de celle-ci, il a été trouvé qu'une température de cuisson à 1400°C est préférable.

A l'issue de la cuisson, la préforme se trouve durcie et stabilisée dans ses dimensions. Elle passe alors à un dernier poste 54 (ou ensemble de postes) de rectification pour obtenir les cotes finales du bolus. Dans l'exemple, la préforme après cuisson est soumise à un ré-alésage (poste 52) pour assurer le dimensionnement précis du logement, afin d'obtenir une boue fermeture avec un rivet auto-bloquant ou une vis à pression.

## Revendications

1. Bolus pour l'identification électronique d'un ruminant, destiné à se loger dans le réseau de ce dernier, et comprenant un corps (10) ayant un logement (12) destiné à renfermer un dispositif d'échange de données (14),
caractérisé en ce que le corps (10) est réalisé en un matériau à base d'alumine (Al₂O₃).

2. Bolus selon la revendication 1, caractérisé en ce que l'alumine est présente dans le matériau en une quantité comprise entre 60 % à 99,5 % en poids.

3. Bolus selon la revendication 1 ou 2, caractérisé en ce que l'alumine est présente dans le matériau en une quantité comprise entre 75 % et 99,5 % en poids, et de préférence entre 80 % et 99,5 %.

4. Bolus selon l'une quelconque des revendications 1 à 3, caractérisé en ce que le matériau est en outre à base d'alumine (Al₂O₃) et de silice (SᵢO₂).

5. Bolus selon la revendication 4, caractérisé en ce que l'alumine et la silice constituent ensemble au moins 80% en poids, et de préférence au moins 90% en poids de la composition du matériau.

6. Bolus selon l'une quelconque des revendications 1à 5, caractérisé en ce que le matériau contient en outre au moins l'un des composés suivants :
MgO
CaO
BaO
Na₂O
K₂O
Fe₂O₃
TiO₂.

7. Bolus selon la revendication 6, caractérisé en ce que lesdits composés sont présents chacun en une quantité comprise entre 0,1 et 2 % en poids.

8. Bolus selon l'une quelconque des revendications 1 à 7, caractérisé en ce qu'il est sensiblement non magnétique.

9. Bolus selon l'une quelconque des revendications 1 à 8, caractérisé en ce que la densité du matériau est égale ou supérieure à 2,5 g/cm³, de façon préférentielle égale ou supérieure à 3 g/cm³ et, de façon plus préférentielle, égale ou supérieure à 3,5 g/cm³.

10. Bolus selon l'une quelconque des revendications 1 à 9, caractérisé en ce que le barycentre et le centre géométrique du corps coïncident sensiblement.

11. Bolus selon l'une quelconque des revendications 1 à 10, caractérisé en ce que le corps (10) a sensiblement la forme d'un cylindre avec des bords chanfreinés (10a) ou arrondis.

12. Bolus selon l'une quelconque des revendications 1 à 11, caractérisé en ce que le rapport entre la longueur et le rayon du corps (10) est compris dans une plage variant entre 2:1 et 5:1.

13. Bolus selon l'une quelconque des revendications 1 à 12, caractérisé en ce que le rapport entre la longueur et le rayon du corps (10) est dans une plage située entre 2,5:1 et 4:1.

14. Bolus selon l'une quelconque des revendications 1 à 13, destiné aux ruminants ayant un poids supérieur à environ 25 kg, caractérisé en ce que la longueur du corps (10) est dans une plage entre 50 et 90 mm.

15. Bolus selon l'une quelconque des revendications 1 à 13, destiné aux ruminants ayant un poids inférieur à environ 25 kg, caractérisé en ce que la longueur du corps (10) est dans une plage entre 30 et 70 mm.

16. Bolus selon l'une quelconque des revendications 1 à 15, caractérisé en ce que le logement (12) pour le dispositif électronique d'échange de données (14) est accessible par une extrémité ou les deux extrémités opposées du corps.

17. Bolus selon la revendication 16, caractérisé en ce que ledit logement (12) est un trou borgne dans l'axe principal du corps.

18. Bolus selon la revendication 16, caractérisé en ce que ledit logement (12) est un trou traversant dans l'axe principal du corps.

19. Bolus selon la revendication 17 ou 18, caractérisé en ce que ledit trou (12) est fermé à l'aide d'une résine époxy ou de ciment plastique résistant à l'environnement régnant dans le réseau du ruminant.

20. Bolus selon la revendication 17 ou 18, caractérisé en ce que ledit trou (12) est fermé à la ou à chaque extrémité à l'aide d'une pièce mâle (18), telle qu'une vis à pression ou un rivet pouvant se bloquer contre une portion de paroi dudit trou.

21. Bolus selon la revendication 18, caractérisé en ce que ledit trou (12) est fermé à chaque extrémité par un rivet auto-bloquant constitué par deux éléments séparés (21, 22) ayant chacun une portion de tige (23, 24) à une extrémité de laquelle se trouve une tête (25, 26), les deux tiges respectives étant agencées de manière à s'engager par leurs extrémités libres et à se bloquer l'une dans l'autre en refermant entre elles le dispositif d'échange de données (14).

22. Bolus selon l'une quelconque des revendications 1 à 20, caractérisé en ce qu'il comprend en outre un manchon (16) en matériau élastique destiné à recevoir le dispositif d'échange de données et adapté pour se loger sans jeu dans le logement (12).

23. Bolus selon l'une quelconque des revendications 1 à 22, équipé d'un dispositif d'échange de données (14) au sein dudit logement (12).

24. Procédé de fabrication d'un bolus ruminal selon l'une quelconque des revendications 1 à 23, caractérisé en ce qu'il comporte les étapes de :
- préparer un mélange à base d'alumine (Al₂O₃),
- former à partir du mélange une préforme du corps du bolus, et
- soumettre la préforme à une étape de cuisson.

25. Procédé selon la revendication 24, caractérisé en ce qu'il comporte en outre une étape de mise aux dimensions finales et de finition de la préforme du corps du bolus après l'étape de cuisson.

26. Procédé selon la revendication 24 ou 25, caractérisé en ce que l'étape de cuisson s'effectue à une température comprise entre 1000°C et 2500°C.

27. Procédé selon la revendication 26, caractérisé en ce que la température de cuisson est sensiblement égale à 1400°C.

28. Procédé selon l'une quelconque des revendications 24 à 27, caractérisé en ce que l'étape de la préforme est réalisée par extrusion et par découpe de la pièce extrudée conformément à la forme générale du corps du bolus.

29. Procédé selon la revendication 28, caractérisé en ce que le logement (12) du corps du bolus est réalisé par perçage avant l'étape de cuisson.

30. Procédé selon l'une quelconque des revendications 24 à 29, caractérisé en ce qu'il comprend en outre l'étape d'installation d'un dispositif d'échange de données (14) au sein d'un logement (12) dans le corps du bolus et de fermeture dudit logement.

## Claims

1. A bolus for electronic identification of a ruminant and adapted to rest in the plexus thereof, comprising a body (10) having a recess (12) for enclosing a data-exchange device (14),
characterised in that the body (10) is made of material based on alumina (Al₂O₃).

2. A bolus according to claim 1, characterised in that the alumina is present in the material in a proportion between 60% and 99.5% by weight.

3. A bolus according to claim 1 or 2, characterised in that the alumina is present in the material in a proportion between 75% and 99.5% by weight, preferably between 80% and 99.5%.

4. A bolus according to any of claims 1 to 3, characterised in that the material is also based on alumina (Al₂O₃) and silica (SiO₂).

5. A bolus according to claim 4, characterised in that the alumina and the silica together make up at least 80% by weight, preferably at least 90% by weight, of the composition of the material.

6. A bolus according to any of claims 1 to 5, characterised in that the material also contains at least one of the following compounds:
MgO
CaO
BaO
Na₂O
K₂O
Fe₂O₃
TiO₂.

7. A bolus according to claim 6, characterised in that the said compounds are each present in a proportion between 0.1 and 2% by weight.

8. A bolus according to any of claims 1 to 7, characterised in that it is substantially non-magnetic.

9. A bolus according to any of claims 1 to 8, characterised in that the density of the material is equal to or greater than 2.5 g/cm³, preferably equal to or greater than 3 g/cm³ and more preferably equal to or greater than 3.5 g/cm³.

10. A bolus according to any of claims 1 to 9, characterised in that the barycentre and the geometric centre of the body substantially coincide.

11. A bolus according to any of claims 1 to 10, characterised in that the body (10) has substantially the shape of a cylinder with bevelled (10a) or rounded edges.

12. A bolus according to any of claims 1 to 11, characterised in that the ratio of the length to the radius of the body (10) is in a range varying between 2:1 and 5:1.

13. A bolus according to any of claims 1 to 12, characterised in that the ratio of the length to the radius of the body (10) is in a range between 2.5:1 and 4:1.

14. A bolus according to any of claims 1 to 13, intended for ruminants weighing more than approximately 25 kg, characterised in that the length of the body (10) is in a range between 50 and 90 mm.

15. A bolus according to any of claims 1 to 13, intended for ruminants weighing less than approximately 25 kg, characterised in that the length of the body (10) is in a range between 30 and 70 mm.

16. A bolus according to any of claims 1 to 15, characterised in that the recess (12) for the electronic data-exchange device (14) is accessible via one end or both opposite ends of the body.

17. A bolus according to claim 16, characterised in that the said recess (12) is a blind hole along the principal axis of the body.

18. A bolus according to claim 16, characterised in that the recess (12) is a through hole along the principal axis of the body.

19. A bolus according to claim 17 or 18, characterised in that the hole (12) is closed by an epoxy resin or plastic cement resistant to the environment in the ruminant's plexus.

20. A bolus according to claim 17 or 18, characterised in that the hole (12) is closed at one end or both ends by a male part (18) such as a pressure screw or a rivet adapted to lock against a part of the wall of the hole.

21. A bolus according to claim 18, characterised in that the hole (12) is closed at each end by a self-locking rivet comprising two separate elements (21, 22) each having a rod portion (23, 24) with a head (25, 26) at one end, the two respective rods being adapted to engage via their free ends and to lock in one another and enclose the data-exchange device (14) between them.

22. A bolus according to any of claims 1 to 20, characterised in that it also comprises a sleeve (16) of resilient material for receiving the data-exchange device and adapted to rest without clearance in the recess (12).

23. A bolus according to any of claims 1 to 22, equipped with a data-exchange device (14) in the said recess (12).

24. A method of producing a ruminal bolus according to any of claims 1 to 23, characterised in that it comprises the steps of:
- preparing a mixture based on alumina (Al₂O₃),
- forming a preform of the bolus body from the mixture, and
- subjecting the preform to a firing step.

25. A method according to claim 24, characterised in that it also comprises a step of converting the preform of the bolus body to its final and finished dimensions after the firing step.

26. A method according to claim 24 or 25, characterised in that the firing step is carried out at a temperature between 1000°C and 2500°C.

27. A method according to claim 26, characterised in that the firing temperature is substantially equal to 1400°C.

28. A method according to any of claims 24 to 27, characterised in that the preform step is effected by extrusion and by cutting the extruded part to the general shape of the bolus body.

29. A method according to claim 28, characterised in that the recess (12) in the bolus body is made by drilling before the firing step.

30. A method according to any of claims 24 to 29, characterised in that it also comprises the step of installing a data-exchange device (24) in the recess (12) in the bolus body and closing the said recess.

## Patentansprüche

1. Bolus zur elektronischen Identifizierung eines Wiederkäuers, vorgesehen zur Aufnahme in dessen Netzmagen, umfassend einen Körper (10) mit einer Aufnahme (12), die zum Einschließen eines Datenaustauschgeräts (12) vorgesehen ist,
dadurch gekennzeichnet, daß der Körper (10) aus einem Material auf der Basis von Aluminiumoxid (Al₂O₃) ausgebildet ist.

2. Bolus nach Anspruch 1, dadurch gekennzeichnet, daß das Aluminiumoxid in dem Material in einer Menge zwischen 60 Gew.-% - 99,5 Gew.-% enthalten ist.

3. Bolus nach Anspruch 1 oder 2, dadurch gekennzeichnet, daß das Aluminiumoxid in dem Material in einer Menge zwischen 75 Gew.-% und 99,5 Gew.-%, vorzugsweise zwischen 80 und 99,5 Gew.-% enthalten ist.

4. Bolus nach einem der Ansprüche 1 bis 3, dadurch gekennzeichnet, daß das Material weiterhin auf Aluminiumoxid (Al₂O₃) und Kieselerde (SᵢO₃) basiert.

5. Bolus nach Anspruch 4, dadurch gekennzeichnet, daß das Aluminiumoxid und die Kieselerde gemeinsam mindestens 80 Gew.-%, vorzugsweise mindestens 90 Gew.-% der Materialzusammensetzung ausmachen.

6. Bolus nach einem der Ansprüche 1 bis 5, dadurch gekennzeichnet, daß das Material außerdem mindestens eine der folgenden Zusammensetzungen enthält:
MgO
CaO
BaO
Na₂O
K₂O
Fe₂O₃
TiO₂.

7. Bolus nach Anspruch 6, dadurch gekennzeichnet, daß die Zusammensetzungen jeweils in einer Menge zwischen 0,1 und 2 Gew.-% vorhanden sind.

8. Bolus nach einem der Ansprüche 1 bis 7, dadurch gekennzeichnet, daß er im wesentlichen nicht-magnetisch ist.

9. Bolus nach einem der Ansprüche 1 - 8, dadurch gekennzeichnet, daß die Dichte des Materials gleich oder größer als 2,5 g/cm³ ist, vorzugsweise gleich oder größer 3 g/cm³, am meisten bevorzugt gleich oder größer als 3,4 g/cm³ ist.

10. Bolus nach einem der Ansprüche 1 bis 10, dadurch gekennzeichnet, daß der Schwerpunkt und die geometrische Mitte des Körpers im wesentlichen zusammenfallen.

11. Bolus nach einem der Ansprüche 1 bis 10, dadurch gekennzeichnet, daß der Körper (10) im wesentlichen die Form eines Zylinders mit abgefasten (10a) oder abgerundeten Rändern aufweist.

12. Bolus nach einem der Ansprüche 1 bis 11, dadurch gekennzeichnet, daß das Verhältnis zwischen der Länge und dem Radius des Körpers (10) in einem Schwankungsbereich zwischen 2:1 und 5:1 liegt.

13. Bolus nach einem der Ansprüche 1 bis 12, dadurch gekennzeichnet, daß das Verhältnis zwischen der Länge und dem Radius des Körpers (10) in einem Bereich zwischen 2,5:1 und 4:1 liegt.

14. Bolus nach einem der Ansprüche 1 bis 13, bestimmt für Wiederkäuer mit einem Gewicht von mehr als etwa 25 kg, dadurch gekennzeichnet, daß die Länge des Körpers (10) in einem Bereich zwischen 50 und 90 mm liegt.

15. Bolus nach einem der Ansprüche 1 bis 13, bestimmt für Wiederkäuer mit einem Gewicht von weniger als etwa 25 kg, dadurch gekennzeichnet, daß die Länge des Körpers (10) in einem Bereich zwischen 30 und 70 mm liegt.

16. Bolus nach einem der Ansprüche 1 bis 15, dadurch gekennzeichnet, daß die Aufnahme (12) für das elektronische Datenaustauschgerät (14) von einem Ende oder von zwei einander abgewandten Enden des Körpers her zugänglich ist.

17. Bolus nach Anspruch 16, dadurch gekennzeichnet, daß die Aufnahme (12) ein Sackloch in der Hauptachse des Körpers ist.

18. Bolus nach Anspruch 16, dadurch gekennzeichnet, daß die Aufnahme (12) ein die Hauptachse des Körpers durchsetzendes Loch ist.

19. Bolus nach Anspruch 17 oder 18, dadurch gekennzeichnet, daß das Loch (12) mit Hilfe eine Epoxyharzes oder eines Kunststoffkitts verschlossen ist, der widerstandsfähig gegenüber der in dem Netzmagen des Wiederkäuers herrschenden Umgebung ist.

20. Bolus nach Anspruch 17 oder 18, dadurch gekennzeichnet, daß das Loch (12) an dem oder an jedem Ende mit Hilfe eines Steckteils (18) verschlossen ist, beispielsweise einer Druckschraube oder eines Niets, die bzw. der sich an einem Teil der Lochwand abstützen kann.

21. Bolus nach Anspruch 18, dadurch gekennzeichnet, daß das Loch (12) an jedem Ende von einem selbstsperrenden Niet verschlossen wird, gebildet durch zwei getrennte Elemente (21, 22) mit jeweils einem Schaftteil (23, 24), an dessen einem Ende sich ein Kopf (25, 26) befindet, wobei die beiden Schäfte jeweils derart bearbeitet sind, daß sie mit ihren freien Enden zusammenwirken und sich gegenseitig verrasten, wobei sie zwischen sich das Datenaustauschgerät (14) einschließen.

22. Bolus nach einem der Ansprüche 1 bis 20, dadurch gekennzeichnet, daß er außerdem eine Hülse (16) aus elastischem Werkstoff aufweist, bestimmt zur Aufnahme des Datenaustauschgeräts und angepaßt zur spielfreien Unterbringung in der Aufnahme(12).

23. Bolus nach einem der Ansprüche 1 bis 22, ausgerüstet mit einem Datenaustauschgerät (14) Im Inneren der Aufnahme (12).

24. Verfahren zum Fertigen eines Bolus für Wiederkäuer nach einem der Ansprüche 1 bis 23, dadurch gekennzeichnet, daß es folgende Schritte umfaßt:
- Vorbereiten eines Gemisches auf der Basis von Aluminiumoxid (Al₂O₃),
- Ausbilden eines Vorformlings des Boluskörpers aus dem Gemisch, und
- der Vorformling wird einer Aushärtphase unterzogen.

25. Verfahren nach Anspruch 24, dadurch gekennzeichnet, daß es außerdem eine Phase beinhaltet, in der der Vorformling des Boluskörpers nach der Aushärtphase seine Endabmessungen und eine Endbearbeitung erhält.

26. Verfahren nach Anspruch 24 oder 25, dadurch gekennzeichnet, daß die Aushärtphase bei einer Temperatur zwischen 1000 °C und 2500 °C erfolgt.

27. Verfahren nach Anspruch 26, dadurch gekennzeichnet, daß die Aushärttemperatur etwa 1400 °C beträgt.

28. Verfahren nach einem der Ansprüche 24 bis 27, dadurch gekennzeichnet, daß die Phase der Ausbildung des Vorformlings realisiert wird durch Extrusion und durch Abschneiden des extrudierten Stücks entsprechend der allgemeinen Form des Boluskörpers

29. Verfahren nach Anspruch 28, dadurch gekennzeichnet, daß die Aufnahme (12) des Boluskörpers durch Bohren vor der Aushärtphase realisiert wird.

30. Verfahren nach einem der Ansprüche 24 bis 29, dadurch gekennzeichnet, daß es außerdem die Phase der Unterbringung eines Datenaustauschgerätes (14) im Inneren der Aufnahme (12) in dem Boluskörper und des Verschließens der Aufnahme beinhaltet.
